(19) Europäisches Patentamt
European Patent Office
Office européen des brevets

(11) **EP 2 469 297 B1**

(12) **EUROPÄISCHE PATENTSCHRIFT**

(45) Veröffentlichungstag und Bekanntmachung des Hinweises auf die Patenterteilung:
**01.10.2014 Patentblatt 2014/40**

(51) Int Cl.:
***G01S 17/10*** *(2006.01)*     ***G01S 7/483*** *(2006.01)*
***G01S 7/487*** *(2006.01)*

(21) Anmeldenummer: **11450139.8**

(22) Anmeldetag: **10.11.2011**

(54) **Verfahren zur Entfernungsmessung mittels Laserimpulsen**

Method for measuring distance by means of laser impulses

Procédé de mesure d'éloignement à l'aide d'impulsions laser

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2010 AT 21042010**

(43) Veröffentlichungstag der Anmeldung:
**27.06.2012 Patentblatt 2012/26**

(73) Patentinhaber: **Riegl Laser Measurement Systems GmbH**
**3580 Horn (AT)**

(72) Erfinder:
• **Ullrich, Andreas**
**3003 Gablitz (AT)**
• **Pfennigbauer, Martin**
**3430 Tulln (AT)**
• **Ederer, Gerhard**
**3841 Windigsteig (AT)**
• **Zierlinger, Wolfgang**
**3495 Rohrendorf (AT)**

(74) Vertreter: **Weiser, Andreas**
**Patentanwalt**
**Kopfgasse 7**
**1130 Wien (AT)**

(56) Entgegenhaltungen:
**EP-A1- 2 189 814**     **EP-A2- 1 413 896**
**DE-A1-102007 010 236**     **US-A- 4 730 189**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Entfernungsmessung mittels Laserimpulsen.

Beim Laserentfernungsmessen über große Entfernungen ergibt sich das Problem, dass die Energie der reflektierten Laserimpulse und damit das Signal/Rausch-Verhältnis ("signal-to-noise ratio", SNR) im Empfangskanal des Laserentfernungsmessers sehr gering sind. Einer Verbesserung des SNR durch Erhöhen der Sendeleistung sind Grenzen der Augensicherheit gesetzt. Als Abhilfe ist es bekannt, eine Folge von Laserimpulsen auszusenden und die Empfangssignale der reflektierten Laserimpulse ("Echoimpulse") aufzusummieren, bis sie einen Detektionsschwellwert überschreiten ("pre-detection averaging"). Das auf diese Weise erzielbare SNR steigt proportional mit der Wurzel der Anzahl aufsummierter Echoimpulse.

Das Aussenden einer Vielzahl von Laserimpulsen pro Messpunkt verzögert jedoch die Messung linear proportional mit der Anzahl der Impulse. Insbesondere beim Laserscannen, bei dem eine Vielzahl nebeneinanderliegender Zielpunkte vermessen werden, um ein 3D-Abbild ("Punktewolke") der Umgebung zu erstellen, ist eine kurze Gesamtmesszeit pro Entfernungsmesspunkt entscheidend, wenn der gesamte Scanvorgang nicht inakzeptabel lang werden soll.

Zur Beschleunigung der Messung ist daher eine möglichst hohe Impulswiederholungsrate ("pulse repetition rate", PRR) wünschenswert. Andererseits kann diese wiederum nicht beliebig erhöht werden, weil sie durch die Impulslaufzeit über den vermessbaren Entfernungsbereich begrenzt wird: Wird der nächste Impuls schon ausgesandt, noch bevor der Echoimpuls des letzten Impulses eingelangt ist, können die eintreffenden Echoimpulse nicht mehr eindeutig ihrem jeweiligen Sendeimpuls zugeordnet werden, was als "pulses in the air"- bzw. "multiple time around"-Problem (MTA) bekannt ist. Die maximale Größe des eindeutig vermessbare Entfernungsbereichs, der "MTA-Zone", ist umgekehrt proportional zur Impulswiederholungsrate.

Zur Überwindung der MTA-Grenze der Impulswiederholungsrate ist es bekannt, die einzelnen Impulse durch Variation ihrer Polarisation, Amplitude oder Frequenz voneinander unterscheidbar zu machen, um die Echoimpulse entsprechend zuordnen zu können. Diese Verfahren sind jedoch entweder nur für wenige "pulses in the air" geeignet oder erfordern aufwendig codierte Impulse, was jeweils die Impulsrate und den vermessbaren Entfernungsbereich begrenzt und die Messzeit verlängert.

Die Erfindung setzt sich zum Ziel, ein Verfahren zum Laserentfernungsmessen zu schaffen, welches auch weit entfernte Ziele in einer akzeptablen Messzeit vermessen kann. Dieses Ziel wird mit einem Verfahren der einleitend genannten Art erreicht, umfassend:

Aussenden einer Folge von Laserimpulsen mit variierenden Impulsabständen;

Aufzeichnen von Signalverläufen über der Zeit mit Empfangsimpulsen, die von an Umgebungszielen reflektierten Laserimpulsen stammen, in zumindest einem Satz von Zeitfenstern, von denen jedes in einem festen vorgegebenen zeitlichen Abstand bezüglich des Aussendezeitpunkts eines Laserimpulses der Folge beginnt;

überlagerndes Aufsummieren der in den Zeitfenstern des Satzes aufgezeichneten Signalverläufe zu einem Summensignalverlauf;

Detektieren zumindest eines einen Schwellwert überschreitenden Impulses im Summensignalverlauf; und

Messen der Entfernung eines Umgebungsziels aus der Zeitlage des detektierten Impulses im Summensignalverlauf.

Es sei erwähnt, dass das Variieren des Impulsabstands bzw. der Impulswiederholungsrate als sog. "PRR-Modulation" auf dem Gebiet der Radartechnik an sich bekannt ist, siehe z.B. EP 1 413 896 A2 oder US 4 730 189 um "Geisterechos" ("ghosting") von Sendeimpulsen außerhalb der betrachteten MTA-Zone zu identifizieren. Die vorliegende Erfindung beruht auf der Erkenntnis, dass der Einsatz einer PRR-Modulation bei einem pre-detection-averaging-Verfahren zu einer automatischen Unterdrückung von Geisterechos aus anderen MTA-Zonen als der gerade betrachteten führt. Dadurch wird es möglich, weit entfernte Ziele in einem bestimmten Entfernungsmessbereich mit einer hohen Zahl von Laserimpulsen rasch und eindeutig zu vermessen.

Gemäß einem bevorzugten Merkmal der Erfindung wird als fester vorgegebener zeitlicher Abstand ein ganzzahliges Vielfaches des durchschnittlichen Impulsabstands in der Laserimpulsfolge, plus ein konstanter Bruchteil desselben, gewählt. Dadurch kann jeweils eine von mehreren MTA-Zonen als Eindeutigkeits-Messbereich ausgewählt werden.

Durch Wiederholen des Verfahrens für verschiedene ganzzahlige Vielfache können Umgebungsziele in mehreren MTA-Zonen vermessen und so ein vollständiger Überblick über Umgebungsziele in einem auf mehrere MTA-Zonen erweiterten Entfernungsmessbereichen erhalten werden.

Darüber hinaus eröffnet die selektive Betrachtung einzelner MTA-Zonen die Möglichkeit für die nachstehenden vorteilhaften Weiterbildungen der Erfindung, bei welchen die Messergebnisse aus zumindest zwei MTA-Zonen gemeinsam ausgewertet werden, um die Messsicherheit und -genauigkeit zu erhöhen.

Eine erste bevorzugte Weiterbildung des erfindungsgemäßen Verfahrens zeichnet sich demgemäß dadurch aus,

dass die Signalverläufe der Empfangsimpulse in zumindest zwei Sätzen von Zeitfenstern aufgezeichnet werden, wobei der genannte zeitliche Abstand für jeden Satz verschieden ist;

dass für jeden Satz ein eigener Summensignalverlauf aufsummiert wird, wobei in zumindest zwei Summensignalverläufen jeweils zumindest ein den Schwellwert überschreitender Impuls detektiert wird;

dass die in verschiedenen Summensignalverläufen detektierten Impulse in Bezug auf Amplitude und/oder Impulsbreite verglichen werden, um Impulse, die in einem Summensignalverlauf eine geringere Amplitude und/oder größere Impulsbreite haben als ein Impuls an derselben Zeitlage in einem anderen Summensignalverlauf, auszuschließen; und

dass die Entfernung(en) anhand des/der verbliebenen Impulse(s) gemessen wird/werden.

Dadurch können die Detektionsergebnisse aus einer MTA-Zone dazu verwendet werden, die Detektionsergebnisse aus einer anderen MTA-Zone zu verifizieren oder falsifizieren, was die Messsicherheit erhöht. In weiterer Folge ist es dadurch auch möglich, den Schwellwert für die Detektion der Impulse zu reduzieren und damit die Messempfindlichkeit bzw. -genauigkeit zu erhöhen: Denn "Geisterechos", die einen zu geringen Schwellwert überschreiten könnten, können durch eine höherpriore Berücksichtigung der "echten" Echoimpulse in den "richtigen" MTA-Zonen, welche dort an denselben (relativen) Zeitlagen zu einem größeren und/oder schmäleren Impuls führen, eliminiert werden.

Die genannten Vergleiche der Zeitlagen, Amplituden und/oder Impulsbreiten der in den einzelnen MTA-Zonen detektierten Impulse können mit verhältnismäßig einfachen rechentechnischen Mitteln durchgeführt werden, wodurch sich diese Ausführungsform besonders für eine Echtzeitimplementierung eignet.

Eine alternative bevorzugte Weiterbildung der Erfindung zeichnet sich dadurch aus,

dass die Impulsabstände gespeichert werden;

dass die Signalverläufe der Empfangsimpulse in zumindest zwei Sätzen von Zeitfenstern aufgezeichnet werden, wobei der genannte zeitliche Abstand für jeden Satz verschieden ist;

dass für jeden Satz ein eigener Summensignalverlauf aufsummiert wird, wobei in zumindest einem Summensignalverlauf zumindest ein den Schwellwert überschreitender Impuls detektiert wird;

dass aus diesem detektierten Impuls für zumindest einen anderen Summensignalverlauf eine Summe von Pseudo-Empfangsimpulsen generiert wird, deren Amplituden ein Bruchteil seiner Amplitude und deren Zeitlagen um die gegenseitigen Zeitdifferenzen der gespeicherten Impulsabstände versetzt sind;

dass dieser andere Summensignalverlauf durch davon Subtrahieren der Summe von Pseudo-Empfangsimpulsen bereinigt wird;

dass in dem bereinigten Summensignalverlauf zumindest ein einen reduzierten Schwellwert überschreitender weiterer Impuls detektiert wird; und

dass die Entfernung eines weiteren Umgebungsziels aus der Zeitlage des detektierten weiteren Impulses gemessen wird.

Diese Variante erreicht mit etwas größerem Rechenaufwand eine noch höhere Messsicherheit und Messgenauigkeit. Aus den in einem ersten Schritt detektierten Impulsen werden zunächst "Geisterechos" (die genannte Summe von Pseudo-Empfangsimpulsen) synthetisiert, um welche die jeweils anderen MTA-Zonen kompensiert werden. Anschließend kann in einem zweiten Schritt der Schwellwert reduziert werden, um weitere "echte" Echoimpulse zu detektieren. Im Ergebnis kann die Empfindlichkeit und Genauigkeit des Verfahrens wesentlich gesteigert werden.

Für die Generierung der Pseudo-Empfangsimpulse könnte grundsätzlich der tatsächlich aufgezeichnete Impulsverlauf des den ersten Schwellwert überschreitenden Impulses verwendet werden. Dieser Impulsverlauf könnte dann in seiner Amplitude reduziert und - um die gegenseitigen Zeitdifferenzen versetzt - vervielfacht werden. Eine Vereinfachung des Rechenaufwands ergibt sich, wenn gemäß einer bevorzugten Variante des Verfahrens für das Generieren vorgespeicherte Impulsformen verwendet werden, die in Amplitude und Zeitlage modifiziert werden, um die genannten Pseudo-Empfangsimpulse zu bilden. Die vorgespeicherten Impulsformen stellen eine gute Näherung für die Generierung der Geisterechos dar.

Der Impulsabstand könnte im einfachsten Fall periodisch deterministisch variiert werden. Bevorzugt wird er statistisch zufällig in der Art eines Phasenjitters variiert, um Störeffekte durch Periodizitäten auszuschließen.

Bevorzugt werden die genannten Zeitfenster kürzer als der minimale Impulsabstand in der Laserimpulsfolge gewählt, um störende Randeffekte zu vermeiden.

Das Laserentfernungsmessverfahren der Erfindung eignet sich in besonders vorteilhafter Weise zum Laserscannen, indem die Aussenderichtung der Laserimpulse nach Aussendung einer Folge verändert wird, um die Entfernung zumindest eines neben dem ersten liegenden zweiten Umgebungsziels zu bestimmen. Dadurch können mit einer hohen Impulswiederholungsrate in kurzer Zeit auch weit entfernte Ziele gescannt werden.

Ein derartiges Laserscanverfahren erfordert eine Art "Stop-and-go"-Betrieb eines gepulsten Laserabtaststrahls, um diesen jeweils aufeinanderfolgend für mehrere Impulse auf ein und denselben Punkt zu richten. In Weiterentwicklung dieses Verfahrens haben die Anmelder erkannt, dass ein solcher - nur mittels aufwendiger Schrittschaltmotoren erreichbarer - "Stop-and-go"-Betrieb nicht zwingend erforderlich ist: Gemäß einer bevorzugten Variante des Laserscanverfahrens kann die Aussenderichtung der Laserimpulse während der Aussendung einer Folge auch kontinuierlich so langsam verändert werden, dass - aufgrund ihres nicht-"ideal-punktförmigen", ausgedehnten Auftreff- bzw. Ausleuchtbereichs - zumindest einige Laserimpulse der Folge an demselben Umgebungsziel reflektiert werden. Dadurch ergeben sich fortlaufend überlappende Echoimpulse, welche die grundlegende Funktionalität des Verfahrens pro Messpunkt nicht signifikant beeinträchtigen.

Die Erfindung wird nachstehend anhand eines bevorzugten Ausführungsbeispiels unter Bezugnahme auf die begleitenden Zeichnungen näher erläutert, in denen zeigen:

Fig. 1 schematisch die Reflexionen eines gepulsten Lasermessstrahls an zwei gestaffelten Umgebungszielen;

Fig. 2 beispielhafte Impulsverläufe eines Pre-detection-averaging-Verfahrens nach dem Stand der Technik;

die Fig. 3 bis 6 beispielhafte Impulsverläufe verschiedener Ausführungsformen des Entfernungsmessverfahrens der Erfindung; und

die Fig. 7 und 8 die Auftreffbereiche zweier verschiedener Ausführungsformen des Laserscanverfahrens der Erfindung.

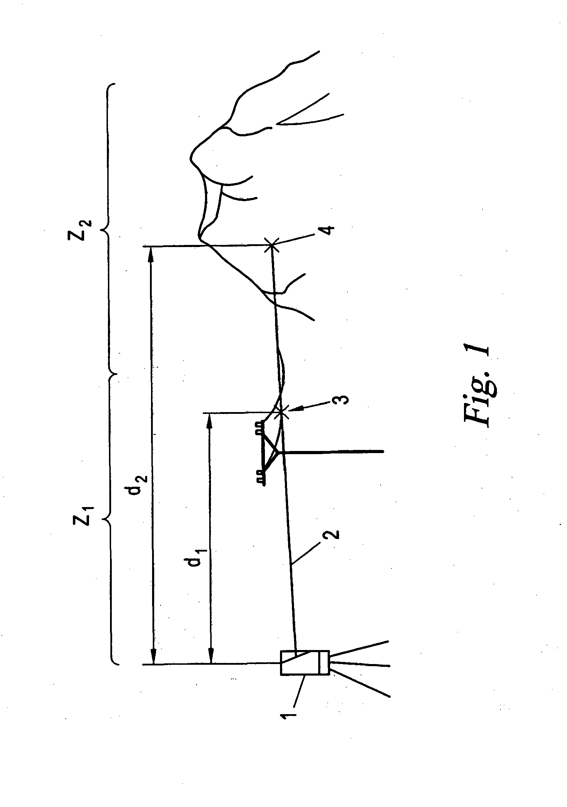

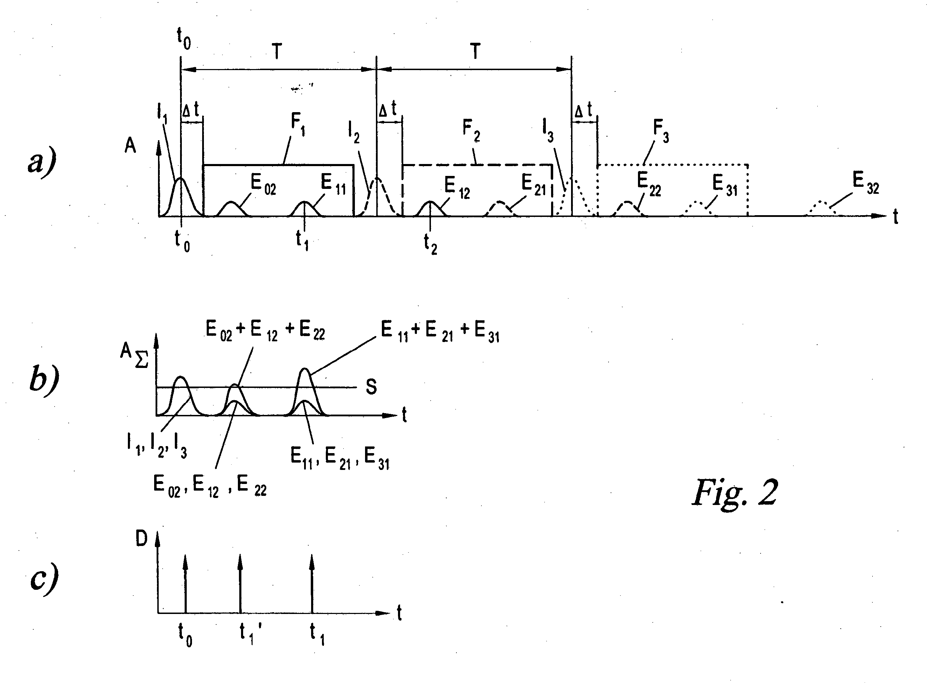

Gemäß den Fig. 1 und 2 sendet ein Laserentfernungsmesser 1 einen gepulsten Lasermessstrahl 2 auf Ziele 3, 4 in seiner Umgebung, um aus den Impulslaufzeiten der von den Zielen 3, 4 reflektierten Laserimpulse die Entfernungen $d_1$, $d_2$ zu den Zielen 3, 4 zu bestimmen, wie in der Technik bekannt.

Zur Erhöhung des Signal/Rausch-Verhältnisses (SNR) im Empfangskanal des Laserentfernungsmessers 1 wird gleich eine ganze Folge von Laserimpulsen $I_1$, $I_2$, $I_3$ usw., allgemein $I_i$, ausgesandt und die an den Umgebungszielen reflektierten Laserimpulse, auch "Echoimpulse" bzw. "Empfangsimpulse" genannt, werden im Laserentfernungsmesser 1 als Signalverlauf über der Zeit t aufgezeichnet, wie in Fig. 2 im Detail gezeigt.

Fig. 2a zeigt den Signalverlauf von beispielhaften Empfangsimpulsen $E_{ij}$, die von den an den Umgebungszielen 3, 4 reflektierten Laserimpulsen $I_i$ stammen, beispielsweise als Empfangsamplitude oder -leistung A über der Zeit t. In dem gezeigten Beispiel wird für den ersten ausgesendeten Laserimpuls $I_1$ zu einem ersten Zeitpunkt $t_1$ ein erster Empfangsimpuls $E_{11}$, der von der Reflexion am Ziel 3 herrührt, und zu einem zweiten Zeitpunkt $t_2$ ein zweiter Empfangsimpuls $E_{12}$, der von der Reflexion am weiter entfernten Ziel 4 stammt, empfangen. In gleicher Weise hat der (nicht gezeigte) vorhergehende Laserimpuls $I_0$ Empfangsimpulse $E_{01}$ (nicht gezeigt) und $E_{02}$ zur Folge, der nächste Sendeimpuls $I_2$ Empfangsimpulse $E_{21}$ und $E_{22}$, der dritte Laserimpuls $I_3$ Empfangsimpulse $E_{31}$, $E_{32}$ usw.

Die Laserimpulse $I_i$ werden mit einem vorgegebenen Impulsabstand T = 1/PRR ausgesandt, wobei PRR die Impulswiederholungsrate ("pulse repetition rate") ist. Die Signalverläufe der Empfangsimpulse $E_{ij}$ werden nach jedem Sendeimpuls $I_i$ über ein Zeitfenster $F_i$ aufgezeichnet, das sich an den Aussendezeitpunkt des Laserimpulses $I_i$ in einem vorgegebenen Abstand $\Delta t$ anschließt, mit $\Delta t \geq 0$.

Wie in Fig. 2b gezeigt, werden die in den Zeitfenstern $F_i$ aufgezeichneten Signalverläufe der Empfangsimpulse $E_{ij}$ überlagernd aufsummiert, um einen Summen-Signalverlauf $A_\Sigma$ zu erhalten. Das Aufsummieren kann sowohl fortlaufend, d.h. jeweils bei Eintreffen eines neuen Signalverlaufs, oder nach Aufzeichnung aller Signalverläufe durchgeführt werden.

Anschließend werden im Summen-Signalverlauf $A_\Sigma$ jene Zeitpunkte $t_1$, $t_2$ usw. detektiert (siehe Fig. 2c), zu denen der Summen-Signalverlauf $A_\Sigma$ einen vorgegebenen Schwellwert S übersteigt. Die Zeitpunkte $t_1$, $t_2$ usw., allgemein $t_i$, werden als Empfangszeitpunkte der Empfangsimpulse im Laserentfernungsmesser für die Laufzeit- und damit Entfernungsmessung zu den Zielen 3, 4 verwendet.

Soweit beschreibt Fig. 2 ein herkömmliches Pre-detection-averaging-Verfahren, bei welchem die Verläufe zahlreicher Empfangsimpulse $E_{ij}$ vor der Detektion ("pre-detection") aufsummiert ("averaging") werden, um ihr Signal/Rausch-Verhältnis (SNR) durch konstruktive Überlagerung zu verbessern. Das SNR steigt proportional mit der Wurzel der Anzahl aufsummierter Signalverläufe.

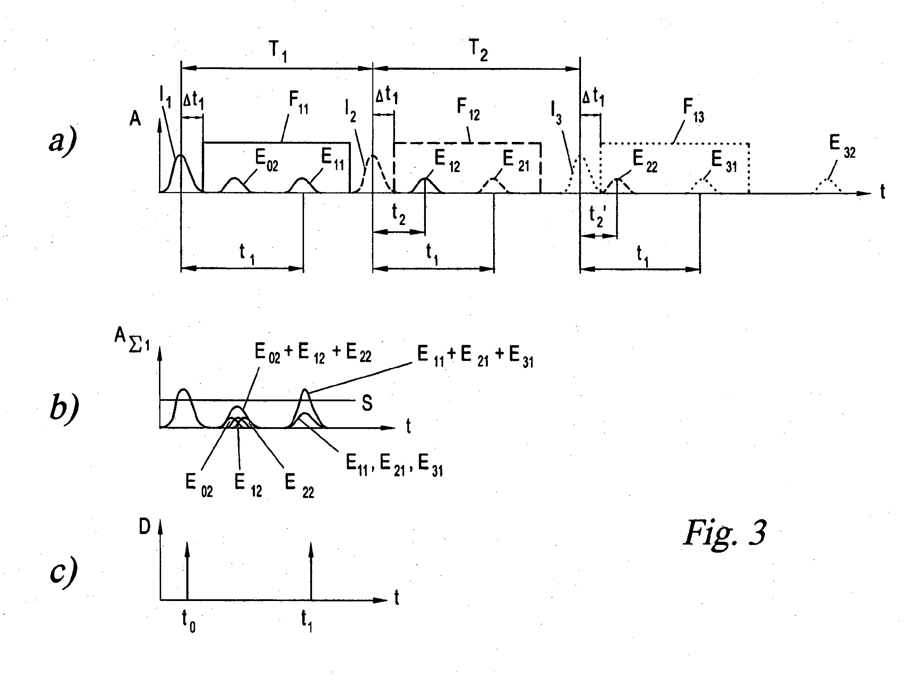

Wie aus Fig. 2a ersichtlich, kann sich dabei das Problem ergeben, dass schon der nächste Laserimpuls $I_{i+1}$ ausgesandt wird, noch bevor alle Echo- bzw. Empfangsimpulse $E_{ij}$ des vorhergehenden Laserimpulses $I_i$ empfangen wurden. Beispielsweise wird der Laserimpuls $I_2$ bereits ausgesandt, noch bevor der zweite Echo- bzw. Empfangsimpuls $E_{12}$ des ersten Laserimpulses $I_1$ empfangen wurde. Dies ist gleichbedeutend mit der Aussage, dass der Impulsabstand T und das Aufzeichnungsfenster $F_i$ kürzer sind als es der maximalen Messentfernung im zu vermessenden Umgebungsbereich entspricht. In diesem Fall führt die Aufsummierung des Schrittes von Fig. 2b zu "falschen" Empfangsimpulsen ("Geisterechos"), z.B. zu einem vermeintlichen Impulsempfang zum Zeitpunkt $t_1$' im Summensignalverlauf $A_\Sigma$, mit $t_1' = t_2 - T$. Die folgenden Verfahren der Fig. 3 bis 6 überwinden dieses Problem.

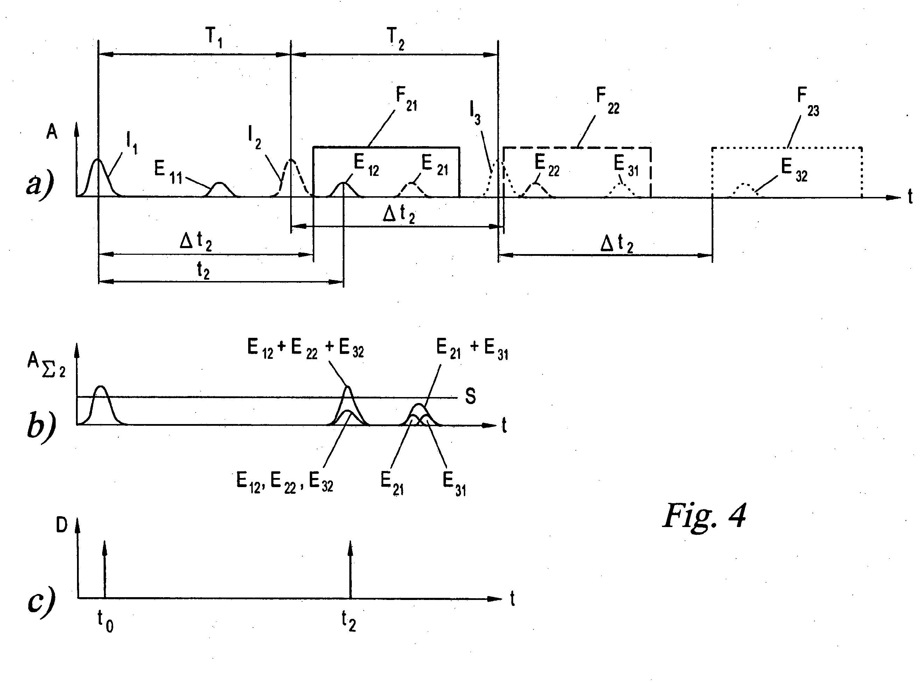

Gemäß den Fig. 3 und 4 werden die Laserimpulse $I_i$ nicht mit einem konstanten Impulsabstand T = 1/PRR ausgesandt, sondern mit einem von Impuls zu Impuls variierenden Impulsabstand $T_i$. So beträgt z.B. der Impulsabstand zwischen dem ersten und dem zweiten Laserimpuls $T_i$, jener zwischen dem zweiten und dem dritten Impuls $T_2 \neq T_1$ usw. Der Impulsabstand $T_i$ wird von Impuls zu Impuls nur geringfügig variiert, beispielsweise +/-1%, +/-5% oder +/-10% um einen mittleren Impulsabstand T. Die Variation kann kontinuierlich erfolgen, beispielsweise sinusförmig, dreieckförmig, sägezahnförmig usw., oder bevorzugt statistisch zufällig, einschließlich pseudo-zufällig, d.h. in der Art eines zufälligen "Phasenjitters" der Folge von Impulsen $I_i$.

Ungeachtet der Variation des Impulsabstands $T_i$ werden die Zeitfenster $F_{ki}$ - wie zuvor in Fig. 2 - in einem vorgegebenen Abstand $\Delta t_1$ (Fig. 3) bzw. $\Delta t_2$ (Fig. 4), allgemein $\Delta t_k$, zum jeweiligen Aussendezeitpunkt des jeweiligen Laserimpulses $I_i$ gestartet. In dem in Fig. 3 gezeigten Beispiel wird im Aufzeichnungsfenster $F_{12}$ der Empfangsimpuls $E_{21}$ des Laserimpulses $I_2$ zu einem - bezogen auf das Zeitfenster $F_{12}$ - ersten Zeitpunkt $t_1$ (zur selben "Zeitlage") und der Empfangsimpuls $E_{12}$ des Laserimpulses $I_1$ zu einem - bezogen auf das Zeitfenster $F_{12}$ - zweiten Zeitpunkt $t_2$ aufgezeichnet. Im Aufzeichnungsfenster $F_{13}$ werden der Empfangsimpuls $E_{31}$ des Laserimpulses $I_3$ zu dem - bezogen auf das Zeitfenster $F_{13}$ - selben ersten Zeitpunkt $t_1$ und der Empfangsimpuls $E_{22}$ des Laserimpulses $I_2$ zu einem - bezogen auf das Zeitfenster $F_{13}$ - zweiten Zeitpunkt $t_2$' empfangen, der aufgrund der Impulsabstand-Modulation gegenüber dem vorgenannten Zeitpunkt $t_2$ aus dem zweiten Zeitfenster $F_{12}$ geringfügig verschieden ist, d.h. an einer anderen "Zeitlage" im Zeitfenster liegt.

Die Aufsummierung der in den Zeitfenstern $F_{1i}$ aufgezeichneten Signalverläufe zum Summensignal $A_{\sum 1}$ in Fig. 3b (bzw. $A_{\sum 2}$ in Fig. 4b) führt somit hinsichtlich der Empfangsimpulse $E_{21}$, $E_{31}$ usw. an den jeweils (zeitfensterbezogen) selben Zeitpunkten $t_1$ zu einer kongruenten, d.h. konstruktiven Überlagerung, welche den Schwellwert S überschreitet (Fig. 3c); die "falschen", nicht in das "richtige" Zeitfenster $F_{1i}$ fallenden ("verjitterten") Empfangsimpulse $E_{12}$, $E_{22}$, $E_{32}$ usw. überlagern sich hingegen nicht-kongruent, so dass sie - bei entsprechender Wahl des Schwellwerts S - diesen nicht zu überschreiten vermögen (Fig. 3c). Durch Wahl des entsprechenden Satzes von Aufzeichnungsfenstern $F_{ki}$, der sich durch deren Startabstand $\Delta t_k$ auszeichnet, können somit in einem diesem entsprechenden Entfernungsmessbereich, der "MTA-Zone" $Z_k$, Ziele 3 bzw. 4 eindeutig und empfindlich vermessen werden, u.zw. mit vielen und rasch aufeinanderfolgenden Laserimpulsen $I_i$.

Fig. 4 zeigt das Verfahren von Fig. 3 bei Veränderung des Startabstands $\Delta t_k$ der Aufzeichnungsfenster $F_{ki}$ bezüglich der Laserimpulse $I_i$, wodurch andere Beobachtungs- bzw. MTA-Zonen $Z_k$ ausgewählt werden können. Im gezeigten Beispiel ist der Abstand $\Delta t_2$ um einen mittleren Impulsabstand T gegenüber $\Delta t_1$ erhöht, so dass sich nun die jeweils auf den vorletzten Laserimpuls $I_{i-1}$ zurückzuführenden Empfangsimpulse $E_{ij}$ kongruent überlagern. Damit können nun der Empfangszeitpunkt $t_2$ und daraus die Entfernung $d_2$ des zweiten Ziels 4 in der zweiten MTA-Zone $Z_2$ eindeutig vermessen werden, während Ziele 3 aus den "falschen" MTA-Zonen $Z_1$, $Z_3$ usw. den Schwellwert S nicht mehr erreichen und "ausgeblendet" werden. Die Wahl des Abstands $\Delta t_k$ der Aufzeichnungsfenster $F_{ki}$ eines Satzes von Aufzeichnungsfenstern bestimmt somit die eindeutig vermessbare MTA-Zone $Z_k$.

Die Länge der Zeitfenster $F_{ki}$ wird jeweils bevorzugt kürzer als der minimale Impulsabstand in der Laserimpulsfolge $I_i$ gewählt. Als Abstand $\Delta t_k$ wird wie erläutert bevorzugt ein ganzzahliges Vielfaches des durchschnittlichen Impulsabstands T, plus gegebenenfalls ein konstanter Bruchteil desselben, gewählt, d.h.

$$\Delta t_k = (N + p) \cdot T,$$

mit N = 0, 1, 2, ... und $0 \leq p < 1$.

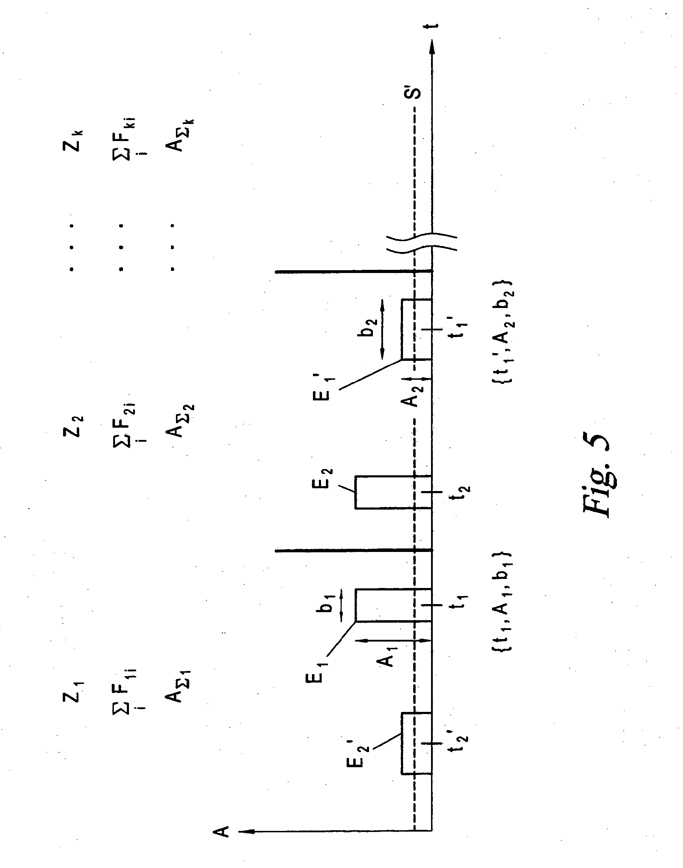

Fig. 5 zeigt eine Erweiterung des Verfahrens der Fig. 3 und 4 durch gegenseitige Berücksichtigung bzw. Auswertung der in mehreren (zumindest zwei) verschiedenen MTA-Zonen $Z_k$ detektierten Empfangsimpulse $E_{ij}$. Das Verfahren der Fig. 3 und 4 wird aufeinanderfolgend (oder auch gleichzeitig, bei entsprechender Gestaltung der Pufferspeicher für die Aufzeichnungsfenster $F_{ki}$) für mehrere verschiedene ganzzahlige Vielfache N des durchschnittlichen Impulsabstands T wiederholt, um Umgebungsziele in mehreren verschiedenen MTA-Zonen $Z_k$ zu detektieren. Die in den Summensignalverläufen $A_{\sum k}$ detektierten Impulse $E_1$, $E_1$', $E_2$, $E_2$' sind symbolisch durch ihre Impulsamplituden A, Impulsbreiten b und Zeitpunkte $t_1$, $t_1$', $t_2$ usw. ihres Auftretens im jeweiligen Zeitfenstersatz

$$F_k = \sum_i F_{ki},$$

d.h. der jeweiligen MTA-Zone $Z_k$, veranschaulicht. Allgemein gesprochen kann jeder detektierte Impuls E somit vereinfacht durch das Triple {t, A, b} repräsentiert werden.

Wenn der Schwellwert für die Impulsdetektion gegenüber dem Schwellwert S der Fig. 3 und 4 auf einen reduzierten Schwellwert S' herabgesetzt wird, kann es passieren, dass von Geisterechos herrührende Empfangsimpulse $E_{ij}$ (z.B. die sich überlagernden Impulse $E_{02}+E_{12}+E_{22}$ von Fig. 3 oder $E_{21}+E_{31}$ von Fig. 4) sich zu einem Impuls $E_1$' bzw. $E_2$' überlagern, der den reduzierten Schwellwert S' übersteigt. Die "richtigen" detektierten Impulse $E_1$ und $E_2$ in den "richtigen" MTA-Zonen $Z_k$ haben allerdings an denselben Zeitlagen $t_1$ und $t_2$ immer noch größere Amplituden A und in der Regel auch geringere Impulsbreiten b als diese "falschen" detektierten Impulse $E_1$' und $E_2$'. Durch Vergleichen der Amplituden A und Impulsbreiten b der in den einzelnen MTA-Zonen $Z_k$ an denselben (relativen) Zeitlagen t auftretenden Impulse E können somit die "richtigen" von den "falschen" detektierten Impulsen E unterschieden werden: Wenn ein erster Impuls E an einer Zeitlage t im Summensignalverlauf $A_{\sum k}$ bzw. der MTA-Zone $Z_k$ eine geringere Amplitude A und bevorzugt größere Breite b hat als ein zweiter Impuls E in einem/r anderen Summensignalverlauf/MTA-Zone an derselben Zeitlage t, dann wird der erste Impuls E als Geisterecho erkannt und von der weiteren Verarbeitung ausgeschlossen.

Durch Relativvergleichen der in den einzelnen Zonen $Z_k$ an gleichen Zeitlagen t auftretenden Impulse E hinsichtlich ihrer Amplituden A und/oder Impulsbreiten b können somit die einzelnen detektierten Impulse E verifiziert bzw. falsifiziert werden, u.zw. bei reduziertem Schwellwert S', was die Empfindlichkeit des Messverfahrens erhöht.

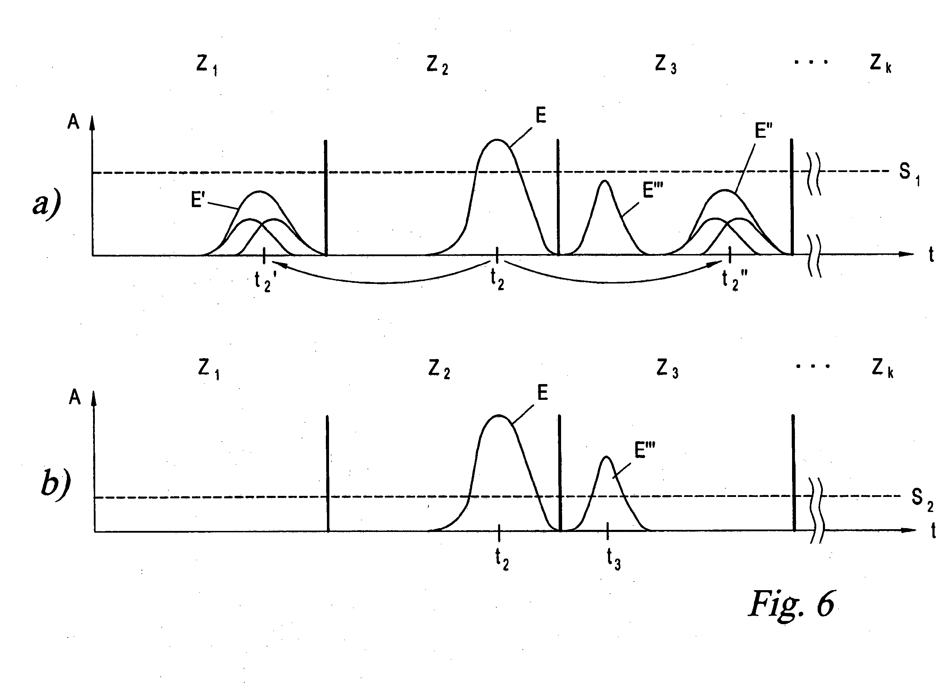

Fig. 6 zeigt eine weitere Verfeinerung des Verfahrens der Fig. 3 und 4. Zunächst werden in einem ersten Schritt a), siehe Fig. 6a, ein oder mehrere Impulse E in einer oder mehreren MTA-Zonen $Z_k$ detektiert, wenn sie einen ersten Schwellwert $S_1$ wie in den Fig. 3 und 4 dargestellt überschreiten.

Für jeden solcherart detektierten Impuls E werden nun Geisterechos für die jeweils anderen MTA-Zonen $Z_k$ "synthetisiert", d.h. es wird für jede andere MTA-Zone $Z_k$ eine Summe E' bzw. E" von "Pseudo-Empfangsimpulsen" generiert, wie sie beispielsweise in Fig. 3 als Summe $E_{02}+E_{12}+E_{22}$ bzw. in Fig. 4 als Summe $E_{21}+E_{31}$ dargestellt ist. Die einzelnen Pseudo-Empfangsimpulse sind dabei amplitudenreduzierte Kopien des Ursprungsimpulses E, die jeweils in ihren Zeitlagen t um die gegenseitigen Zeitdifferenzen ("Phasenjitter") $T_1$-$T_2$, $T_1$-$T_3$, $T_2$-$T_3$ usw. versetzt sind. Da hiefür die Zeitdifferenzen bzw. Phasenjitter der Impulsabstände $T_i$ bekannt sein müssen, werden die Impulsabstände $T_i$ für dieses Verfahren entweder deterministisch variiert oder aufgezeichnet.

Anschließend werden die so generierten Pseudo-Empfangsimpulse E', E" usw. in den Summensignalverläufen $A_{\Sigma k}$ der anderen MTA-Zonen $Z_k$ subtrahiert, um "bereinigte" Summensignalverläufe (Fig. 6b) zu erzeugen.

In einem nächsten Schritt wird der Schwellwert $S_1$ nun auf einen reduzierten Schwellwert $S_2$ herabgesetzt und es wird nochmals detektiert, ob weitere Impulse den - nun reduzierten Schwellwert - $S_2$ überschreiten. Dadurch können "schwache" Empfangsimpulse von "echten" Umgebungszielen, welche zuvor unter den ersten Schwellwert $S_1$ fielen, detektiert werden, wie der beispielhafte Empfangsimpuls E ''' von Fig. 6b.

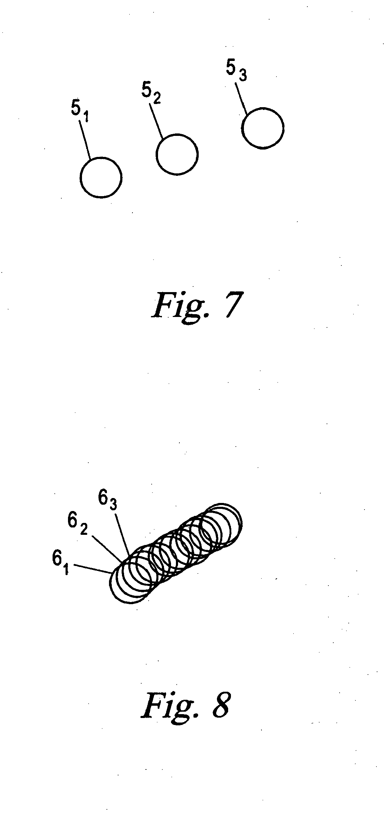

Fig. 7 zeigt eine nochmalige Erweiterung der geschilderten Entfernungsmessverfahren zum Abtasten (Scannen) mehrerer in der Umgebung des Laserscanners 1 nebeneinanderliegender Messziele $5_1$, $5_2$ usw., allgemein $5_n$. Jedes Messziel $5_n$ wird von einer Folge von Laserimpulsen $I_i$ getroffen, wie unter Bezugnahme auf die Fig. 3 bis 6 erörtert, und seine Entfernung vermessen. Der gepulste Lasermessstrahl 2 wird dazu schrittweise ("stop-and-go") vorwärtsbewegt, z.B. über einen Winkelbereich geschwenkt.

Fig. 8 zeigt eine Variante, welche die Bewegung des Lasermessstrahls 2 vereinfacht, indem auf "stop-and-go" verzichtet wird: Der Lasermessstrahl 2 mit den Laserimpulsen $I_i$ wird kontinuierlich fortschreitend vorwärtsbewegt, u.zw. so langsam, dass sich die - nicht ideal-punktförmigen, sondern einen realen Ausleuchtbereich einnehmenden - Auftreffpunkte $6_1$, $6_2$ usw., allgemein $6_n$, der Laserimpulse $I_i$ fortschreitend überlappen. Dadurch wird ein Kompromiss erzielt: Die hier vermessenen Ziele $6_n$ gehen "verschmiert" ineinander über, wobei jedes einzelne Ziel $6_n$ mit mehreren - wenn auch nur teilüberlappenden - Laserimpulsen vermessen wird. Eine derartige kontinuierliche Führung eines Laserstrahls ist einfacher zu bewerkstelligen als ein "Stop-and-go"-Betrieb, weil hierzu beispielsweise nur ein Ablenkspiegel gedreht werden muss.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Verfahren zur Entfernungsmessung mittels Laserimpulsen, umfassend:

   Aussenden einer Folge von Laserimpulsen ($I_i$) mit variierenden Impulsabständen ($T_i$), wobei das Verfahren durch die folgenden Schritte gekennzeichnet ist:

   Aufzeichnen von Signalverläufen über der Zeit (t) mit Empfangsimpulsen ($E_{ij}$), die von an Umgebungszielen (3, 4) reflektierten Laserimpulsen stammen, in zumindest einem Satz ($F_k$) von Zeitfenstern ($F_{ki}$), von denen jedes in einem festen vorgegebenen zeitlichen Abstand ($\Delta t_k$) bezüglich des Aussendezeitpunkts eines Laserimpulses ($I_i$) der Folge beginnt;
   überlagerndes Aufsummieren der in den Zeitfenstern ($F_{ki}$) des Satzes ($F_k$) aufgezeichneten Signalverläufe zu einem Summensignalverlauf ($A_{\Sigma k}$) ;
   Detektieren zumindest eines einen Schwellwert (S) überschreitenden Impulses (E) im Summensignalverlauf ($A_{\Sigma k}$); und Messen der Entfernung ($d_1$, $d_2$) eines Umgebungsziels (3, 4) aus der Zeitlage (t) des detektierten Impulses (E) im Summensignalverlauf.

2. Verfahren nach Anspruch 1, **dadurch gekennzeichnet, dass** als fester vorgegebener zeitlicher Abstand ($\Delta t_k$) ein ganzzahliges Vielfaches (N) des durchschnittlichen Impulsabstands (T) in der Laserimpulsfolge, plus ein konstanter Bruchteil (p) desselben, gewählt wird.

3. Verfahren nach Anspruch 2, **dadurch gekennzeichnet, dass** es für verschiedene Vielfache (N) wiederholt wird, um Umgebungsziele (3, 4) in unterschiedlichen Entfernungszonen ($Z_1$, $Z_2$) zu vermessen.

4. Verfahren nach Anspruch 2, **dadurch gekennzeichnet,**
   **dass** die Signalverläufe der Empfangsimpulse ($E_{ij}$) in zumindest zwei Sätzen ($F_k$) von Zeitfenstern ($F_{ki}$)

aufgezeichnet werden, wobei der genannte zeitliche Abstand ($\Delta t_k$) für jeden Satz ($F_k$) verschieden ist; **dass** für jeden Satz ($F_k$) ein eigener Summensignalverlauf ($A_{\Sigma k}$) aufsummiert wird, wobei in zumindest zwei Summensignalverläufen ($A_{\Sigma k}$) jeweils zumindest ein den Schwellwert (S') überschreitender Impuls (E) detektiert wird; **dass** die in verschiedenen Summensignalverläufen ($A_{\Sigma k}$) detektierten Impulse (E) in Bezug auf Amplitude (A) und/oder Impulsbreite (b) verglichen werden, um Impulse (E), die in einem Summensignalverlauf ($A_{\Sigma k}$) eine geringere Amplitude (A) und/oder größere Impulsbreite (b) haben als ein Impuls (E) an derselben Zeitlage (t) in einem anderen Summensignalverlauf ($A_{\Sigma k}$), von der weiteren Verarbeitung auszuschließen; und **dass** die Entfernung(en) ($d_1$, $d_2$) anhand des/der nach diesem Ausschließen verbliebenen Impulse(s) (E) gemessen wird/werden.

5. Verfahren nach Anspruch 2, **dadurch gekennzeichnet,**
**dass** die Impulsabstände ($T_i$) gespeichert werden; **dass** die Signalverläufe der Empfangsimpulse ($E_{ij}$) in zumindest zwei Sätzen ($F_k$) von Zeitfenstern ($F_{ki}$) aufgezeichnet werden, wobei der genannte zeitliche Abstand ($\Delta t_k$) für jeden Satz ($F_k$) verschieden ist; **dass** für jeden Satz ($F_k$) ein eigener Summensignalverlauf ($A_{\Sigma k}$) aufsummiert wird, wobei in zumindest einem Summensignalverlauf ($A_{\Sigma k}$) zumindest ein den Schwellwert ($S_1$) überschreitender Impuls (E) detektiert wird; **dass** aus diesem detektierten Impuls (E) für zumindest einen anderen Summensignalverlauf ($A_{\Sigma k}$) eine Summe (E', E") von Pseudo-Empfangsimpulsen generiert wird, deren Amplituden (A) Bruchteile der Amplitude (A) des detektierten Impulses (E) und deren Zeitlagen (t) um die gegenseitigen Zeitdifferenzen der gespeicherten Impulsabstände ($T_i$) versetzt sind; **dass** dieser andere Summensignalverlauf ($A_{\Sigma k}$) durch davon Subtrahieren der Summe (E', E") von Pseudo-Empfangsimpulsen bereinigt wird; **dass** in dem bereinigten Summensignalverlauf zumindest ein einen gegenüber dem genannten Schwellwert ($S_1$) reduzierten Schwellwert ($S_2$) überschreitender weiterer Impuls (E''') detektiert wird; und **dass** die Entfernung ($d_1$, $d_2$) eines weiteren Umgebungsziels (3, 4) aus der Zeitlage (t) des detektierten weiteren Impulses (E''') gemessen wird.

6. Verfahren nach Anspruch 5, **dadurch gekennzeichnet, dass** für das Generieren vorgespeicherte Impulsformen verwendet werden, die in Amplitude (A) und Zeitlage (t) modifiziert werden, um die genannten Pseudo-Empfangsimpulse (E', E") zu bilden.

7. Verfahren nach einem der Ansprüche 1 bis 6, **dadurch gekennzeichnet, dass** die Impulsabstände ($T_i$) in der Art eines Phasenjitters zufällig variiert werden.

8. Verfahren nach einem der Ansprüche 1 bis 7, **dadurch gekennzeichnet, dass** die Zeitfenster ($F_{ki}$) kürzer als der minimale Impulsabstand in der Laserimpulsfolge ($I_i$) gewählt werden.

9. Verfahren nach einem der Ansprüche 1 bis 8, ferner zum Laserscannen, **dadurch gekennzeichnet, dass** die Aussenderichtung der Laserimpulse ($I_i$) nach Aussendung einer Folge verändert wird, um die Entfernung zumindest eines neben dem ersten liegenden zweiten Umgebungsziels ($5_n$) zu bestimmen.

10. Verfahren nach einem der Ansprüche 1 bis 8, ferner zum Laserscannen, **dadurch gekennzeichnet, dass** die Aussenderichtung der Laserimpulse ($I_i$) während der Aussendung einer Folge so langsam verändert wird, dass zumindest einige Laserimpulse der Folge an demselben Umgebungsziel ($6_n$) reflektiert werden.

**Claims**

1. Method for measuring the distance by means of laser pulses, comprising:

   sending a series of laser pulses ($I_i$) with varying pulse spacings ($T_i$), wherein the method is **characterized by** the following steps:

   recording of signal progressions over time (t) with reception pulses ($E_{ij}$), which stem from laser pulses reflected by environmental targets (3, 4), in at least on set ($F_k$) of time windows ($F_{ki}$), of which each one starts in a fixed preset timely distance ($\Delta t_k$) with respect to the point in time of sending a laser pulse ($I_i$) of the series; superposingly summing of the signal progressions recorded in the time windows ($F_{ki}$) of the set ($F_k$) to a summed signal progression ($A_{\Sigma k}$); detecting at least one pulse (E) in the summed signal progression ($A_{\Sigma k}$) exceeding a threshold (S); and measuring the distance ($d_1$, $d_2$) of an environmental target (3, 4) from the timely position (t) of the detected pulse (E) in the summed signal progression.

2. Method according to claim 1, **characterized in that** for the fixed preset timely distance ($\Delta t_k$) an integer

multiple (N) of the mean pulse spacing (T) in the laser pulse series, plus a constant fraction (p) of the same, is chosen.

3. Method according to claim 2, **characterized in that** it is repeated for different multiples (N) to measure environmental targets (3,4) in different distance zones ($Z_1$, $Z_2$).

4. Method according to claim 2, **characterized in that** the signal progressions of the reception pulses ($E_{ij}$) are recorded in at least two sets ($F_k$) of time windows ($F_{ki}$), wherein said timely distance ($\Delta t_k$) is different for each set ($F_k$) ;
in that for each set ($F_k$) an own summed signal progression ($A_{\Sigma k}$) is summed, wherein in at least two summed signal progressions ($A_{\Sigma k}$) at least one pulse (E) exceeding the threshold (S') is detected each;
in that the pulses (E) detected in different summed signal progressions ($A_{\Sigma k}$) are compared with respect to the amplitude (A) and/or pulse width (b), to discard pulses (E) from further processing which have a lower amplitude (A) and/or higher pulse width (b) in a summed signal progression ($A_{\Sigma k}$) than an pulse (E) at the same timely position (t) in a different summed signal progression ($A_{\Sigma k}$) ; and
in that the distance/s ($d_1$, $d_2$) is/are measured by means of the pulse/s (E) remaining after said discarding.

5. Method according to claim 2, **characterized in that** the pulse spacings ($T_i$) are stored;
in that the signal progressions of the reception pulses ($E_{ij}$) are recorded in at least two sets of time windows ($F_{ki}$), wherein said timely distance ($\Delta t_k$) is different for each set ($F_k$);
in that for each set ($F_k$) an own summed signal progression ($A_{\Sigma k}$) is summed, wherein in at least one summed signal progression ($A_{\Sigma k}$) at least one pulse (E) exceeding the threshold ($S_1$) is detected;
in that from this detected pulse (E) there is generated for at least one other summed signal progression ($A_{\Sigma k}$) a sum (E', E'') of pseudo reception pulses, the amplitudes (A) of which are a fraction of the amplitude (A) of the detected pulses (E) and their timely positions (t) are shifted by the respective time differences of the stored pulse spacings ($T_i$);
in that this other summed signal progression ($A_{\Sigma k}$) is revised by subtracting the sum (E', E'') of pseudo reception pulses;
in that in the revised summed signal progression there is detected at least one further pulse (E''') exceeding a threshold ($S_2$) which is reduced with respect to said threshold ($S_1$); and
in that the distance ($d_1$, $d_2$) of a further environmental target (3, 4) is measured from the timely position (t) of the detected further pulse (E''').

6. Method according to claim 5, **characterized in that** prestored pulse shapes are used for the step of generating, which are modified in amplitude (A) and timely position (t) to form said pseudo reception pulses (E', E'').

7. Method according to any one of the claims 1 to 6, **characterized in that** the pulse spacings ($T_i$) are varied randomly in the manner of a phase jitter.

8. Method according to any one of the claims 1 to 7, **characterized in that** the time windows ($F_{ki}$) are chosen shorter than the minimal pulse spacing in the laser pulse series ($I_i$).

9. Method according to any one of the claims 1 to 8, further for laser scanning, **characterized in that** the direction of emitting the laser pulses ($I_i$) is changed after emitting a series to determine the distance of at least a second environmental target ($5_n$) lying next to the first one.

10. Method according to any one of the claims 1 to 8, further for laser scanning, **characterized in that** the direction of emitting the laser pulses ($I_i$) is changed so slowly during emitting a series, that at least some laser pulses of the series are reflected at the same environmental target ($6_n$).

**Revendications**

1. Procédé pour la mesure de l'éloignement au moyen d'impulsions laser, comprenant :

émission d'une suite d'impulsions laser ($I_i$) avec des intervalles d'impulsions ($T_i$) variables, le procédé étant **caractérisé par** les étapes suivantes :

enregistrement de courbes de signaux sur le temps (t) avec des impulsions reçues ($E_{ij}$) issues d'impulsions laser réfléchies sur des cibles environnantes (3, 4), dans au moins un ensemble ($F_k$) de fenêtres temporelles ($F_{ki}$), parmi lesquelles chacune débute dans un intervalle temporel fixe prédéfini ($\Delta t_k$) par rapport au moment d'émission d'une impulsion laser ($I_i$) de la suite ;
addition par superposition des courbes de signaux enregistrées dans les fenêtres temporelles ($F_{ki}$) de l'ensemble ($F_k$) en une courbe de signaux totale ($A_{\Sigma k}$) ;
détection d'au moins une impulsion (E) dépassant une valeur seuil (S) dans la courbe de signaux totale ($A_{\Sigma k}$) ; et
mesure de l'éloignement ($d_1$, $d_2$) d'une cible environnante (3, 4) à partir de la position temporelle (t) de l'impulsion (E) détectée dans la courbe de signaux totale.

2. Procédé selon la revendication 1, **caractérisé en ce qu'**un multiple entier (N) de l'intervalle d'impulsions moyen (T) dans la suite d'impulsions laser, plus une fraction constante (p) de celui-ci, est sélectionné en tant qu'intervalle temporel fixe prédéfini ($\Delta t_k$).

3. Procédé selon la revendication 2, **caractérisé en ce qu'**il est répété pour différents multiples (N), pour mesurer des cibles environnantes (3, 4) dans différentes zones d'éloignement ($Z_1$, $Z_2$).

4. Procédé selon la revendication 2, **caractérisé en ce que**
les courbes de signaux des impulsions reçues ($E_{ij}$) dans au moins deux ensembles ($F_k$) de fenêtres temporelles ($F_{ki}$) sont enregistrées, dans lequel ledit intervalle temporel ($\Delta t_k$) est différent pour chaque ensemble ($F_k$) ;
**en ce qu'**une courbe de signaux totale ($A_{\Sigma k}$) propre est additionnée pour chaque ensemble ($F_k$), dans lequel au moins une impulsion (E) dépassant une valeur seuil (S') est détectée dans au moins deux courbes de signaux totales ($A_{\Sigma k}$) ;
**en ce que** les impulsions (E) détectées dans différentes courbes de signaux totales ($A_{\Sigma k}$) sont comparées en termes d'amplitude (A) et/ou de largeur d'impulsion (b), pour exclure du traitement suivant des impulsions (E) présentant une plus faible amplitude (A) et/ou une plus grande largeur d'impulsion (b) dans une courbe de signaux totale ($A_{\Sigma k}$) qu'une impulsion (E) dans une autre courbe de signaux totale ($A_{\Sigma k}$) à la même position temporelle (t) ; et
**en ce que** l'éloignement/les éloignements ($d_1$, $d_2$) est/sont mesuré(s) à l'aide de l'impulsion/des impulsions (E) demeurant après cette exclusion.

5. Procédé selon la revendication 2, **caractérisé en que**
les intervalles d'impulsions ($T_i$) sont enregistrés ; les courbes de signaux des impulsions reçues ($E_{ij}$) dans au moins deux ensembles ($F_k$) de fenêtres temporelles ($F_{ki}$) sont enregistrées, où ledit intervalle de temps ($\Delta t_k$) étant différent pour chaque ensemble ($F_k$) ;
**en ce qu'**une courbe de signaux totale ($A_{\Sigma k}$) propre est additionnée pour chaque ensemble ($F_k$), où au moins une impulsion (E) dépassant une valeur seuil ($S_1$) est détectée dans au moins une courbe de signaux totale ($A_{\Sigma k}$) ;
**en ce qu'**à partir de cette impulsion détectée (E), une somme (E', E") de pseudo-impulsions reçues est générée pour au moins une autre courbe de signaux totale ($A_{\Sigma k}$), dont les amplitudes (A) sont des fractions de l'amplitude (A) de l'impulsion détectée (E) et les positions temporelles (t) de celle-ci sont décalées selon les écarts temporels réciproques des intervalles d'impulsions ($T_i$) ;
**en ce que** cette autre courbe de signaux totale ($A_{\Sigma k}$) est corrigé par soustraction de la somme (E', E") des pseudo-impulsions reçues ;
**en ce qu'**au moins une autre impulsion (E''') dépassant une valeur seuil ($S_2$) réduite par rapport à ladite valeur seuil ($S_1$) est détectée dans ladite courbe de signaux totale corrigée ; et
**en ce que** l'éloignement ($d_1$, $d_2$) d'une autre cible environnante (3, 4) est mesuré à partir de la position temporelle (t) de l'autre impulsion (E''') détectée.

6. Procédé selon la revendication 5, **caractérisé en ce que** des formes d'impulsions préenregistrées sont utilisées pour la génération, lesquelles sont modifiées en termes d'amplitude (A) et de position temporelle (t), pour former lesdites pseudo-impulsions reçues (E', E").

7. Procédé selon l'une des revendications 1 à 6, **caractérisé en ce que** les intervalles d'impulsions ($T_i$) sont variées de façon aléatoire à la façon d'une gigue de phase.

8. Procédé selon l'une des revendications 1 à 7, **caractérisé en ce que** les fenêtres temporelles ($F_{ki}$) sont choisies plus courtes que l'intervalle d'impulsions minimal dans la suite d'impulsions laser ($I_i$).

9. Procédé selon l'une des revendications 1 à 8, en outre pour le balayage laser, **caractérisé en ce que** la direction d'émission des impulsions laser ($I_i$) est modifiée après l'émission d'une suite, pour déterminer l'éloignement d'au moins une deuxième cible environnante ($5_n$) située à côté de la première.

10. Procédé selon l'une des revendications 1 à 8, en outre pour le balayage laser, **caractérisé en ce que** la direction d'émission des impulsions laser ($I_i$) est modifiée si lentement pendant l'émission d'une suite, qu'au moins quelques impulsions laser de la suite sont réfléchies sur la même cible environnante ($6_n$).

*Fig. 1*

Fig. 2

*Fig. 3*

a)

b)

c)

EP 2 469 297 B1

*Fig. 4*

*Fig. 5*

EP 2 469 297 B1

Fig. 6

$5_1$　　　$5_2$　　　$5_3$

## Fig. 7

$6_1$　$6_2$　$6_3$

## Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1413896 A2

- US 4730189 A